# EUROPEAN PATENT APPLICATION

(11) **EP 3 148 269 A1**
(43) Date of publication of application: **29.03.2017**
(21) Application number: 15186678.7
(22) Date of filing: 24.09.2015
(51) Int. Cl.: H04W 68/02, H04W 4/00, H04W 28/18, H04W 60/04

(54) **METHOD FOR OPERATING A WIRELESS COMMUNICATION DEVICE SUPPORTING ENHANCED AND NORMAL COVERAGE MODE**

(71) Applicant: Gemalto M2M GmbH, 81541 München (DE)
(72) Inventor: BREUER, Volker, 16727 Boetzow (DE); WEHMEIER, Lars, 14612 Falkensee (DE)
(74) Representative: Grevin, Emmanuel

(57) **Abstract**

The present invention relates to a method for operating a wireless communication device (UE) supporting enhanced coverage mode (EC) and normal coverage mode (NC), the wireless communication device operating with a base node (eNB) in normal coverage mode, comprising the steps for the wireless communication device of:
- listening to normal coverage paging from the base node,

upon conducting a coverage mode change from normal coverage to enhanced coverage mode:
- receiving from the base node signal comprising information whether a coverage mode change to enhanced coverage mode requires sending a coverage area update to the base node,
- if said base node indicates said coverage area update, sending the coverage area update to the base node, and
- listening to enhanced coverage paging from the base node.

## Description

### FIELD OF THE INVENTION

The present invention relates to a method for operating a wireless communication device in a cellular network.

The invention also pertains to a wireless communication device using said method. The invention further relates to a base node of a cellular network operating with such wireless communication device.

### BACKGROUND OF THE INVENTION

In the recent development of cellular technology standards, in particular for long term evolution (LTE), it is considered that certain types of devices, so-called low-cost (LC) devices, in particular machine type communication (MTC) devices, are operating in conditions where they do not have the optimal transmission and reception conditions in relation to base nodes resp. eNodeBs of the cellular network they are operating in. This affects as prominent example metering devices in basements, but other types of devices in extreme conditions may also be affected.

Hence as part of the 3GPP Release 13 definition for such LC devices it was suggested the so-called enhanced coverage (EC) mode. This solves said issues by allowing communication that way that by many repetitive transmissions and receptions of the same data packets the receiver aggregates sufficient power until the data packets can be reliably read from the receiver. A precondition for that is that the base node supports EC devices, otherwise they were barred on that base node.

The new enhanced coverage mode was by now reserved for such LC devices which were permanently operating in extreme conditions. However, also wireless communication devices which are not permanently operating under situations with bad reception conditions might take advantage of the enhanced coverage mode. This holds in particular for movable wireless communication devices which might be temporarily located in reception conditions which would favorably use the enhanced coverage mode. This in particular applies to cars with remote tracking resp. theft protection systems, that are preferably have these system operable also in underground parking areas, but also a common smartphone or connected tablet might be regularly used in extreme conditions, e.g. in the outback, caves or cellars.

For that use case is was suggested to allow for wireless communication devices to support both modes, the normal coverage mode and the enhanced coverage mode.

However, the support of both modes raises the need for a defined transition between the both modes. As preferably the wireless communication device decides about a coverage mode change, which is the switch between the modes, there is a need for timely indications to the cellular network, resp. the affected base node. The obvious approach would be to send with each coverage mode change a message to the base node. That would lead to the situation that for cell areas comprising e.g. a tunnel each time a wireless communication device supporting both modes would send a first message when entering a tunnel and another message when leaving the tunnel, with a minimal time period between both messages. The impact on the network would be immense, but the gained effect is minimal.

This is where the invention comes into play, as there is a need to find a better approach of handling the transition between normal and enhanced coverage mode and vice versa, which at the same time do not massively increase the overhead signaling.

It is therefore the goal of present invention to propose a solution for an in terms of congestion improved transition of the wireless communication unit operating in a cellular network from enhanced coverage mode to normal coverage mode and/or vice versa.

Further alternative and advantageous solutions would, accordingly, be desirable in the art.

### SUMMARY OF THE INVENTION

For this it is according to a first aspect of the invention suggested a method to operate a wireless communication unit according to claim 1. It is further suggested according to a second aspect of the invention a method according to claim 5. In a third aspect it is proposed a wireless communication device according to claim 7. In a fourth aspect it is suggested a wireless communication device according to claim 10. In a fifth aspect it is proposed a base node according to claim 11. In a sixth aspect of the invention it is proposed a system according to claim 16.

According to the first aspect of the invention it is proposed a method for operating a wireless communication device supporting enhanced coverage mode and normal coverage mode, the wireless communication device operating with a base node in normal coverage mode, comprising the steps for the wireless communication device of:
- listening to normal coverage paging from the base node,
   upon conducting a coverage mode change from normal coverage to enhanced coverage mode:
- receiving from the base node signal comprising information whether a coverage mode change to enhanced coverage mode requires sending a coverage area update to the base node,
- if said base node indicates said coverage area update, sending the coverage area update to the base node, and
- listening to enhanced coverage paging from the base node.

The invention relates to a wireless communication device operating in a cellular network with a base node, the so-called serving base node. The cellular network is in particular a wireless network supporting a cellular technology standard like long term evolution (LTE), which is supportive of the concept of enhanced coverage mode as opposed to normal coverage mode. The cellular network comprises a plurality of base nodes, in particular eNodeBs (eNB). These form the interface to the wireless communication devices or user equipment (UE).

This enhanced coverage mode was developed in particular for machine type communication (MTC) wireless communication devices that are situated in area with a bad coverage in terms of access to the respective cellular network. Hence, it was suggested that in enhanced coverage mode the transmitter, in particular the base node, repeats each transmission up to a maximum threshold and on the receiver side, in particular the wireless communication device for receiving the signals a repetitive reception is carried out until enough power is aggregated in order to decode the signals.

For the inventive method it is the case that the wireless communication device is capable of supporting both the normal coverage mode, the mode which is known for each mobile phone etc., and said enhanced coverage mode. The switch between both modes is called hereinafter coverage mode change. For each coverage mode change, be it from normal to enhanced coverage mode or vice versa, a couple of steps are necessary. Preferably when the base node supporting the normal coverage mode is also supporting the enhanced coverage mode, then it is likely that the wireless communication device will after carrying out the coverage mode change camp on the same base node. Nevertheless the coverage mode change is in particular comparable to a cell reselection.

For the switch from normal coverage to enhanced coverage it is according to a preferred embodiment proposed a method with the step for the wireless communication device of
- monitoring signal quality of the base node and
- conducting a coverage mode change to enhanced coverage mode,
   under the condition that:
   - monitored signal quality from base node in normal coverage mode is under a predetermined threshold, and
   - decodable signals from a base node supporting enhanced coverage mode are received at the wireless communication device.

According to that embodiment it is the wireless communication device which takes the decision to carry out the coverage mode change. But it is important to note, that the wireless communication device is not free to choose the coverage mode, but has to stick to normal coverage mode as long and as soon as it is possible.

By monitoring the signal quality of the signals received from the base node it is determined at the wireless communication device, if it is possible to operate under normal coverage mode. Should the signal quality fall under a predetermined threshold, then the wireless communication device may conduct the coverage mode change under the condition that a base node - in particular the same base node as was or is used in normal coverage mode before - operating in enhanced coverage mode can be detected.

The predetermined threshold is in particular selected in a range, where the base node signals are not suitably received any more, but the base node is still accessible for the wireless communication device. This assures that no interruption of coverage will happen.

The base node, which the wireless communication device is operating with in normal coverage mode, sends with its master information block (MIB) information relating to support of enhanced coverage mode. That can also be understood as an indication that a coverage mode change be impossible with this base node. Nevertheless it needs to be checked if the signals are strong enough when the normal coverage suitability drops, to decode the signals from the base node in enhanced coverage.

So the inventive method is based on a wireless communication device camping on a base node, both supporting enhanced and normal coverage mode, but the signal quality is at the beginning of the process strong enough for operating in normal coverage mode. While operating in normal coverage mode the serving base node is paging the wireless communication device also in normal coverage mode, which is called hereinafter normal coverage paging. Then the wireless communication device decides according to the described process about carrying out a coverage mode change to enhanced coverage mode.

Should the wireless communication device operate with the same base node now in enhanced coverage mode, this is by then not necessarily known to the base node. As the wireless communication device is now not able to receive normal coverage paging, but the serving base node is not aware of the operation of the wireless communication device under enhanced coverage mode, this would mean that the wireless communication device would not receive the paging request from the base node. Hence it would miss incoming calls but also indication in terms of SIB changes etc.

For handling this transition from normal coverage to enhanced coverage it is foreseen to carry out the following steps:
First, the base node sends a signal comprising information whether a coverage mode change to enhanced coverage mode requires the wireless communication device to send a coverage area update to the base node.

Preferably it is suggested that the signal from the base node is a broadcast signal, in particular a system information broadcast.

Such system information broadcast sent from the base node differs for normal coverage and enhanced coverage. In particular for enhanced coverage mode the so-called M-SIBs, which were dedicated for low-cost resp. MTC devices, are used for sending out the respective information. With the information the base node informs the wireless communication device if it expects for the case of a coverage mode change to receive a message from the wireless communication device.

That message informing about the carried out coverage mode change is hereinafter called coverage area update. It is any type of message, comparable to a tracking area update, but in the first place provided only on the event of a coverage mode change. It is preferably part of an already existing message from the wireless communication device to the base node, like a tracking area update.

In a further foreseen embodiment the base node the wireless communication device is operating with in normal coverage mode and base node the wireless communication device is operating with in enhanced coverage mode are different physical base nodes.

In that case, and when the two base nodes are located in a different tracking area, then the coverage mode change will be transmitted as part of a tracking area update. This does not necessarily means that additional data are sent with the tracking area update, but when the wireless communication device transmits a tracking area update in enhanced coverage mode, then the receiving serving base node will notice the coverage mode change of the wireless communication device.

Further it is advantageous if the wireless communication device after a certain period of time informs the base node about the coverage mode it is continuing to operate in.

Hence, depending upon the signal from the base node, the wireless communication device informs the base node about the coverage mode change with the coverage area update or not. Optionally the base node may confirm reception of the received coverage area update message.

After sending the coverage area update message, the wireless communication device is expecting that the base node is aware of the used mode. Hence, now the transition from normal coverage mode to enhanced coverage mode is fulfilled and the wireless communication device is now able to listen to paging from the base node in enhanced coverage, the so called enhance coverage paging.

The proposed solution is advantageous as it is in the hands of the base node to decide if the wireless communication device is expected to send the coverage area update or not, as this strongly depends upon the local conditions. If there is a tunnel or parking garage in the cell area of the respective base node, then the base node needs to avoid that each wireless communication device passing the tunnel sends coverage area updates for each transition between enhanced and normal coverage mode.

Moreover the base node may have a priori knowledge about the behavior of the wireless communication device, in particular when it collects a profile, where it can derive that the wireless communication device regularly carries out coverage mode changes in the one or the other direction or both. Then the base node could page a wireless communication device not responding to a normal coverage paging consequently in enhanced coverage, although it did not retrieve a coverage area update.

Further the wireless communication device may transmit regularly payload data and would for that anyhow within a short timeframe contact the base node. Through that contact the base node detects the coverage mode the wireless communication device is operating in.

Such the inventive method finds a balance between assured connectivity of a wireless communication device in the transition from normal coverage and enhanced coverage mode, the reduction of signaling overhead and the local peculiarities in certain cell areas.

The second aspect of the invention deals with the transition from enhanced coverage to normal coverage mode. It is therefore proposed a method for operating a wireless communication device (UE) supporting enhanced coverage mode (EC) and normal coverage mode (NC), the wireless communication device operating with a base node (eNB) in enhanced coverage mode, comprising the steps for the wireless communication device of:
- listening to enhanced coverage paging from the base node,
   upon conducting a coverage mode change from normal coverage to enhanced coverage mode:
- listening to enhanced coverage paging and normal coverage paging from the base node,
- sending an indication relating to the coverage mode change to normal coverage mode by sending a regular transmission from the wireless communication device to the base node, and
- afterwards listening to normal coverage paging only from the base node.

Here the same preconditions apply as for the first aspect of the invention. The only difference is that the wireless communication device is operating in enhanced coverage mode, and the base node is aware of that fact. Hence at the beginning of the proposed method the base node is sending its paging to the wireless communication device in enhanced coverage paging. Consequently the wireless communication device is listening to that paging. Nevertheless the wireless communication device regularly monitors the signaling situation of normal coverage base nodes, in particular the base node it is currently operating with in enhanced coverage mode. Should it turn out during this monitoring, that a suitable normal coverage base node is available, the wireless communication device would need to decide to carry out a coverage mode change to normal coverage.

When that coverage mode change is carried out by the wireless communication device, it is a different transition phase than sketched out for the first aspect of the invention. As the wireless communication device moves to a better coverage situation than before, it is now capable to receive the normal coverage paging and continue to receive the enhanced coverage paging. As both types of paging are done on the same paging channel, but with different paging resources, it is possible for the wireless communication device to monitor both pagings.

This is what is happening right after the coverage mode change for a certain time.

Then as part of a regular transmission in normal coverage mode from the wireless communication device to the base node it is indicated that the wireless communication device is again operating in normal coverage mode. Consequently the base node will page the wireless communication device only in normal coverage mode. Hence the wireless communication device stops listening to enhanced coverage paging after that regular transmission. Optionally the base node sends a confirmation to the wireless communication device indicating the acceptance of the coverage mode change indication by way of the regular transmission.

Preferably the regular transmission is at least one of:
- a tracking area update,
- a time-triggered coverage area update,
- a connection request,
- a paging response.

Such known transmission from the wireless communication device are in particular understood as regular transmissions.

The tracking area update (TAU) is sent regularly after a certain periodic timer has expired, upon change of the tracking area and in a couple of other occasions defined in the cellular technology standard for LTE.

The coverage area update is foreseen according to this invention as an event based message to the base node, nevertheless a time-triggered coverage area request may also be foreseen, comparable to the TAU, hence this would be understood as regular transmission in the sense of this embodiment. With a connection request the wireless communication device requests from the base node to set up a connection for payload data exchange, in particular a PDP context for an IP connection.

Finally when a wireless communication device is paged in particular for setting up a connection it is supposed to send a response to accept the paging resp. connection request. As for the second aspect of the invention both the normal coverage paging and the enhanced coverage paging is monitored by the wireless communication device, with the paging response the base node may be made aware of the coverage mode change, although its enhanced coverage paging was noticed by the wireless communication device.

According to the third aspect of the invention it is proposed a wireless communication device configured to operate in a cellular network, and the wireless communication device further configured to support enhanced coverage mode and normal coverage mode, characterized in that while operating with a base node in normal coverage mode being configured to:
- listen to normal coverage paging from the base node,
   upon a conducted coverage mode change from normal coverage mode to enhanced coverage mode;
- receive from the base node signal comprising information whether a coverage mode change to enhanced coverage mode requires sending a coverage area update to the base node,
- if said base node indicates said coverage area update, send the coverage area update to the base node and
- listen to enhanced coverage paging from the base node.

The third aspect of the invention shares the advantages of the first aspect. For the case that the base node waives said coverage area update, it is further proposed:
- to send an indication relating to the coverage mode change to normal coverage mode by sending a regular transmission from the wireless communication device to the base node, and
- afterwards to listen to normal coverage paging from the base node.

With this embodiment the wireless communication device is configured to indicate to the base node the coverage mode change with a regular transmission. When that regular transmission is carried out, the wireless communication mode can be confident that it is correctly paged in enhanced coverage mode. Hence it will not continue monitoring enhanced coverage paging.

According to the fourth aspect of the invention it is proposed a wireless communication device configured to operate in a cellular network, and the wireless communication device further configured to support enhanced coverage mode and normal coverage mode,
characterized in that while operating with a base node in enhanced coverage mode being configured to:
- listen to enhanced coverage paging from the base node,
   upon conducting a coverage mode change from normal coverage to enhanced coverage mode:
- listen to enhanced coverage paging and normal coverage paging from the base node,
- send an indication relating to the coverage mode change to normal coverage mode by sending a regular transmission from the wireless communication device to the base node, and
- afterwards listen to normal coverage paging only from the base node.

The fourth aspect of the invention shares the advantages of the second aspect.

According to the fifth aspect of the invention it is proposed a base node being part of a cellular network, configured to serve at least one camping wireless communication device in enhanced coverage mode or in normal coverage mode, further configured to transmit a signal to the at least one wireless communication device comprising information whether a coverage mode change from normal coverage mode to enhanced coverage modes requires sending a coverage area update to the base node,
to receive such a coverage area update from said wireless communication device,
in response to conduct paging of said wireless communication device in enhanced coverage mode.

This fifth aspect of the invention relates to the adaptations to conventional base nodes, in particular eNodeBs (eNB), for supporting the above mentioned aspects for solving the addressed issue.

The major change is the signal transmitted to a wireless communication device which indicates if for this very base node it is mandatory to send a coverage area update message upon a coverage mode change or not.

In a preferred embodiment the signal is transmit as part of a broadcast, in particular a system information broadcast.

Preferably the system information broadcast (SIB) has a defined flag for that purpose, in particular called "coverage change indication flag". If this coverage change indication flag is set is up to the base node configuration, and the situation of the cell area. Hence with this flag a priori knowledge of the base node can be taken into account in order to find out if it is preferred to get probably plenty of coverage area updates or to live with a short phase where pagings of singular wireless communication device would not be answered immediately. In particular when the base node resp. the cellular network has knowledge about wireless communication device supporting both the normal and enhanced coverage mode, then it might be advantageous to automatically switch to enhanced coverage paging without finally being notified about a coverage mode change to enhanced coverage mode.

In any case, when the base node receives a coverage area update message from a wireless communication device, then the base node will continue to page this wireless communication device in the indicated coverage mode, in particular the enhanced coverage mode.

However if the base node indicates that no coverage area update is required for a wireless communication device carrying out a coverage mode change, then the base node is according to another preferred embodiment configured to receive a regular transmission from said wireless communication device in a different coverage mode than the base node is conducting paging with, in response conduct paging of said wireless communication device in the coverage mode used for the regular transmission.

With such a regular transmission the base node finally has the information about the coverage mode the wireless communication device is currently operating in. Hence it will continue to page the wireless communication device with the indicated coverage mode.

The regular transmission is in particular at least one out of:
- a tracking area update,
- a time-triggered coverage area update,
- a connection request,
- a paging response.

These regular transmissions are described for the second aspect of the invention.

From the perspective of the wireless communication device, the serving base node is the interface to the cellular network. Actually it is not the base node alone. In particular it is proposed a base node further connected with a mobility management entity, being part of the cellular network,
the base node being configured, after detecting the coverage mode change of the wireless communication device,
to exchange information related with said coverage mode change with the mobility management entity,
in response to receive instructions from the mobility management entity to conduct paging in the indicated coverage mode.

With that embodiment decisions in particular relating to paging are assigned to the mobile management entity (MME), and as such the base node hands over retrieved findings to the MME and in response acts as instructed by the MME towards the wireless communication device. Hence, decisions what type of paging towards specific wireless communication device is conducted is in that sense made in the MME.

This is in particular advantageous as the MME has a better overview and thus can hold more knowledge, while the base nodes, in particular the eNodeBs, need to concentrate its resources on serving the plurality of wireless communication devices currently camping on the base node.

According to a sixth aspect of the invention it is suggested a system of a wireless communication device operating with a base node,
the base node being configured to send enhanced coverage system information to the wireless communication device comprising the indication to send coverage area updates, and
upon reception of said indication the wireless communication device being configured to send a coverage area update to the base node under the condition that it conducts a coverage mode change from normal coverage mode to enhanced coverage mode.

The sixth aspect shares the advantages of the previous aspects and relates to the interaction between a base node according to the previous aspects and a wireless communication device according to other previous aspects.

As it is shown this invention advantageously solves the depicted problem and offers a solution which mitigates the addressed problems of air interface overload and still maintains a stable transition between operation in normal coverage mode and enhanced coverage mode and vice versa.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a wireless communication device of the type to which the present invention is applied as an embodiment in conjunction with a base node of the type to which another aspect of the invention is applied as an embodiment;
- Fig. 2: shows a state diagram of an exemplifying embodiment of the inventive method;
- Fig. 3: represents an exemplary flow diagram indicating one aspect of the invention as an embodiment;
- Fig. 4: represents in another exemplary flow diagram indicating another aspect of the invention as an embodiment;

For an exemplary wireless communication device supporting both enhanced coverage mode and normal coverage mode the

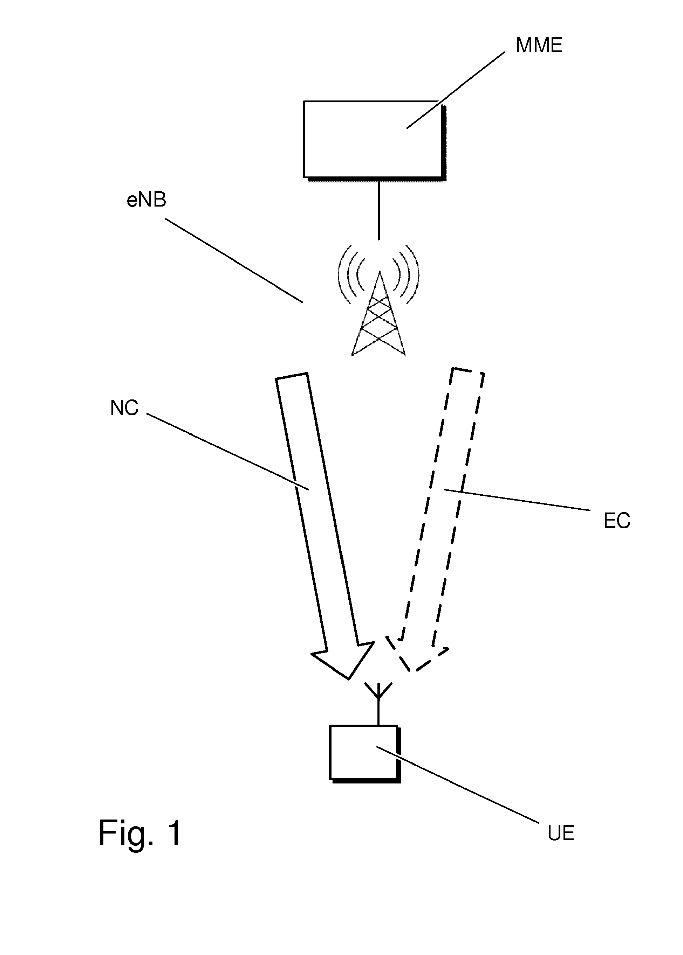

FIG. 1 schematically shows an exemplary wireless communication device UE according to an embodiment of the invention in communicative relation to an exemplary base node (eNB) according to another aspect of the invention. The wireless communication device and the base node are qualified by the fact that they support both the normal coverage mode (NC) and the enhanced coverage mode (EC). The wireless communication device UE is in particular a device that is supposed to change its location, like an entertainment unit of a car or a handheld device like a smartphone, a connected tablet, a point-of-sale (POS) unit or an asset tracker.

The mobility management entity (MME) is in the cellular network that component that instructs the base node eNB about the paging, and hence needs practically the information described in the above states. For simplicity reasons in the following it is referred to the base node as having information, making decisions and sending the paging, but having in mind that such behavior of the base node eNB might be following instructions from the MME. The wireless communication device UE is able to be operated both in normal coverage mode NC and in enhanced coverage mode EC, which means, that uplink and downlink communication is repeated that often that the receiving party is able to aggregate the gained power and thus decode the signals when a certain threshold is reached.

The difficult part with the capability to support both modes is the transition between both modes. It is the wireless communication device UE that is able to decide based on measurements of the signal quality - that is strength, signal-to-noise-ratio (SNR), decoding errors etc. - in which mode it is favorably operating.

For continued reliable operation with the base node eNB, it needs to get the information about the coverage mode change. This is in particular necessary as the base node eNB conducts paging operations, e.g. for incoming calls, changes of the SIBs etc., differently in normal coverage and enhanced coverage. That means, a base node pages a wireless communication device in normal coverage with normal coverage paging, and when the wireless communication device is operating in enhanced coverage, it is paged with enhanced coverage paging.

Would the wireless communication device UE report each coverage mode change immediately to the base node eNB, then this could lead to a flooding of the air interface and the base node in situations like a tunnel, where frequently such wireless communication devices UE pass by and have for a short timeframe a bad reception quality and thus decide to carry out a coverage mode change to enhanced coverage mode.

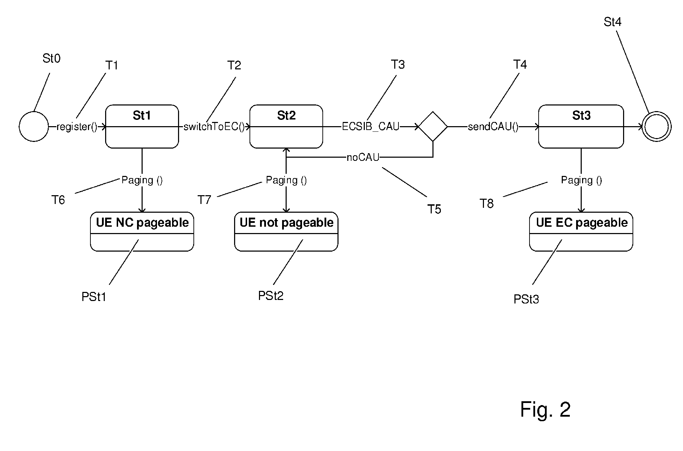

For the transition period there are to distinguish a couple of states, where the majority of those is shown in FIG. 2:
State 1 (St1): Wireless communication device (UE) operating in NC, base node (eNB) expects UE to be in NC.
State 2 (St2): UE operating in EC, eNB/MME expects UE to be in NC
State 3 (St3): UE operating in EC, eNB /MME expects UE to be in EC
State 4 (not shown): UE operating in NC, eNB/MME expects UE to be in EC.

During states St1 and St3 the base node reaches the wireless communication device by the respective paging mode. Elaborate solutions are needed for the states St2 and St4. State 2 (St2) in particular requires a solution as the wireless communication device cannot be paged in that state.

In the shown state diagram of FIG. 2 it is assumed that the wireless communication device is starting in unregistered state St0 and then executes the register operation T1, which is the transition to state St1, that is the wireless communication device operating in NC. A paging operation T6 would lead to the paging status PSt1: The wireless communication device is pageable with normal coverage paging. This status is the normal status of common wireless communication device like handsets.

Then transition T2 is carried out, that is the wireless communication device switches from normal coverage mode to enhanced coverage mode. At that moment the status St2 is reached, as the base node has no indication about that transition. In effect a paging operation T7 would without a special handling not be successful, hence the UE is in the paging status PSt2, and is not pageable with normal coverage paging. It is quite unlikely that the base node would then alternatively carry out on suspicion an enhanced coverage paging. This is the case as a) various reasons can be the cause for the wireless communication device not answering paging, e.g. a power down, and b) enhanced coverage paging requires a lot of power resources due to the repetitions. Hence the base node only carries out enhanced coverage paging for a wireless communication device when it positively knows or at least has a strong indication out of a priori knowledge about the coverage mode change to enhanced coverage of the wireless communication device.

How the situation is solved is dependent upon the base node itself. Preferably directly after registration, in particular as part of a broadcast of system information (SIB or M-SIB), each base node may decide how a wireless communication device camping on the respective base node has to behave when it changes to enhanced coverage mode.

If the SIB indicates (in T3) that each coverage mode change is reported, then the wireless communication device is held to report the coverage mode change, in particular with a special message, hereinafter called the coverage area update (T4). This leads state St3, and the base node knows that the UE needs to be paged with enhanced coverage paging.

If the SIB indicates that the coverage mode change needs not to be reported, then the wireless communication device will not report the coverage mode change, which is indicated with transition T5.

Which status is set in the SIB is preferably a configuration of the operator, in particular taking into account the history of previously managed wireless communication devices. To reconsider the example above, if a tunnel or parking lot is situated in the cell area of the base node, then it is preferably advantageous not to urge the wireless communication device to report the coverage mode change to the EC mode.

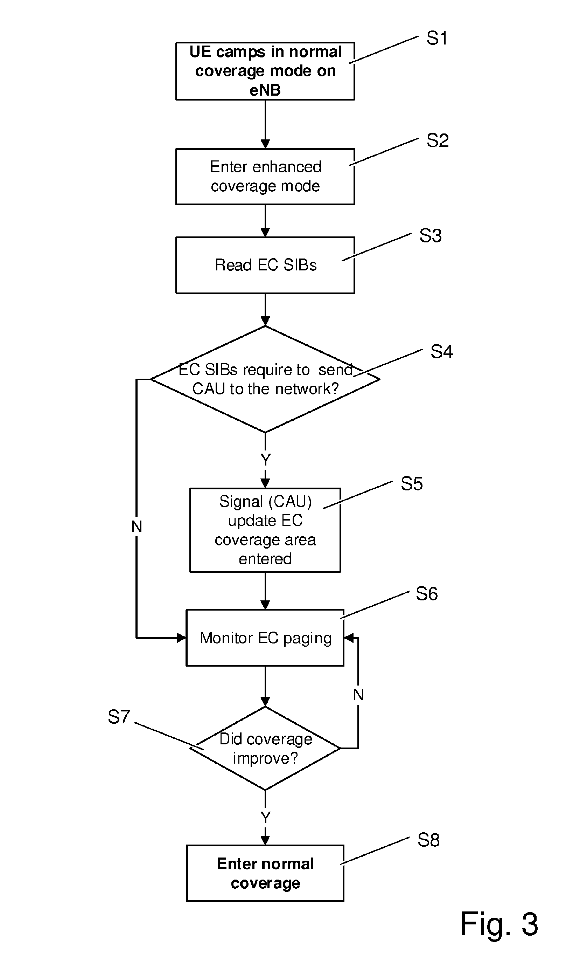

The inventive solution is illustrated in a flow chart in Fig. 3 showing a preferred embodiment of the invention. It starts in S1 with a wireless communication device (UE) operating in normal coverage mode with a base node (eNB). Between step S1 and step S2 the wireless communication device figures out that the base node where it is currently camping on is not suitable for camping anymore, hence it makes a coverage mode change to enhanced coverage mode (S2).

One of the first actions when entering enhanced coverage mode is to read the system information broadcast (SIB) from the base node in step S3. As the wireless communication device is operating in enhanced coverage mode, the respective SIBs for enhanced coverage mode, in particular M-SIBs or EC-SIBs are read.

Part of the SIB is the indication of the base node if it requires the wireless communication device to send an indication that it executed a coverage mode change, in particular a coverage area update. Preferably the SIB has a flag for that, e.g. called coverage change indication flag.

If the coverage change indication flag is set, then in decision step S4 the flow branches to step S5. Hence the wireless communication device needs to send in step S5 the coverage area update message to the base node, and thus makes the base node aware of the coverage mode change.

If the coverage change indication flag is not set, then the wireless communication device will not send the coverage area update message. However it might be the case that e.g. as part of a tracking area update (TAU) the wireless communication device may indicate by sending the TAU to the base node the coverage mode change.

In any case the wireless communication device continues in step S6 with monitoring the enhanced coverage paging instead of normal coverage paging, which would not be decodable by the wireless communication device.

When the wireless communication device is detecting in step S7 that the coverage of the base node improves that way, that it would be suitable to decode the base node in normal coverage, then the wireless communication device would carry out a coverage mode change to normal coverage in step S8.

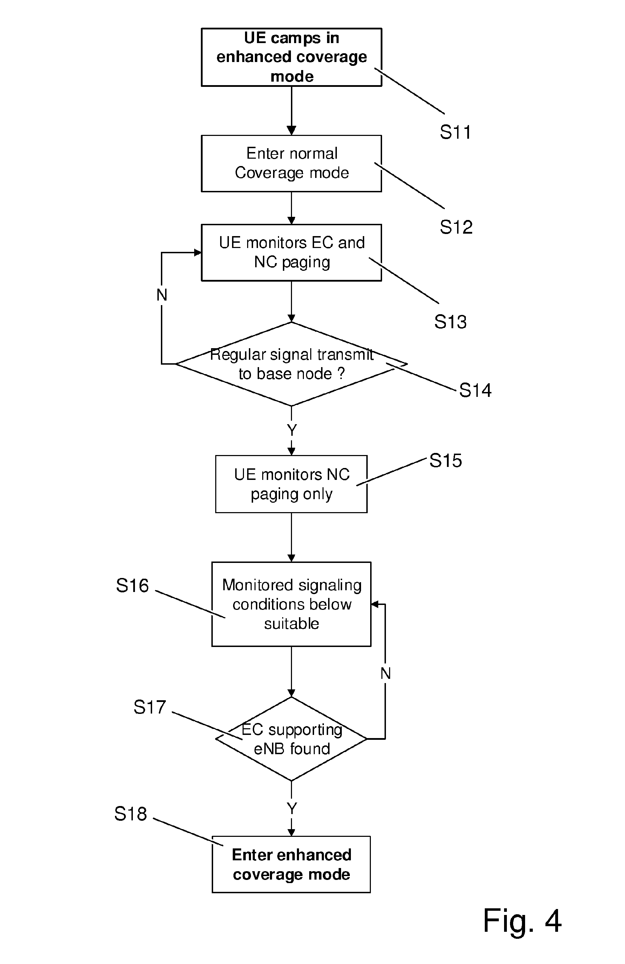

This leads to the flow chart of FIG. 4 starting from a wireless communication device operating in enhanced coverage mode in step S11 and changing - in particular in response to the findings in step S7 of FIG. 3 - to normal coverage mode, as indicate in step S8 and step S12.

This coverage mode change makes it again necessary to cope with the transition, as the base node is again not aware of the coverage mode change at that point in time. The big difference to the transition from normal coverage mode to enhanced coverage mode is now, that the wireless communication device is able to receive pagings in enhanced coverage mode.

Hence the process carries on with step S13 where both pagings, enhanced coverage pagings and normal coverage pagings are monitored by the wireless communication device. This is advantageous as the base node may due to a priori knowledge assume the wireless communication device operating already in the normal coverage mode. By that it is assured that in the transition phase from enhanced coverage mode to normal coverage mode the wireless communication device receives all pagings from the serving base node.

Due to this measure, there is no urgency to inform the base node about the coverage mode change. Hence, there is preferably no event-triggered coverage area update necessary. Regardless of what the coverage change indication flag tells, preferably the wireless communication devices waits with a notice to the base node until a regular transmission to the base node is carried out, in step S14. This is in particular a tracking area update or a time-triggered coverage area update. Should nevertheless a mobile originated (MO) or mobile terminated (MT) connection supposed to be established, the base node will notice that the wireless communication device is now operating in normal coverage mode again.

After one of these measures was carried out, the wireless communication device can stop monitoring enhanced coverage paging, that is in step S15 only the normal coverage paging is continued.

In the following, respectively right after switching from enhanced coverage mode to normal coverage mode, the wireless communication device monitors the suitability conditions of the serving base node in normal coverage in step S16. The wireless communication device in particular needs to figure out if this becomes unsuitable. This is in this embodiment the case when the signal quality is below a predefined threshold. This is in particular the case when the cellular technology standard defined suitability criteria are not met anymore, but technically the receiver still can decode signals from the base node.

In that area the wireless communication device checks for decodable base nodes supporting enhanced coverage mode (S17), in particular the base node where the wireless communication device is currently camping on. If the base node does not indicate, in particular in the MIB, that it supports enhanced coverage mode, it makes no sense to check for the enhanced coverage signals from this base node, but nevertheless other base nodes supporting enhanced coverage mode might be visible.

This steps come in particular important when operating with a base node in normal coverage mode, and the wireless communication device is moved in a room and the door is closed, like in a basement or going in a parking garage. From one moment to the other the base node is not decodable anymore in normal coverage mode. It can furthermore be that even if the previously serving base node supports enhanced coverage but is in this situation not the EC base node with the best signal quality, that is the least number of repetitions are needed for decoding the submitted signals. In such case the wireless communication device would carry out a coverage mode change (S18) and continue operating with the EC base node with the best signaling conditions.

If however in step S17 no suitable EC base node is found, then the wireless communication device carries on with monitoring signaling conditions, but this in effect means that the wireless communication device is out of service and not able to be paged anymore.

When the wireless communication device successfully changed to enhanced coverage mode in step S18, then process in FIG. 3 starting with step S2 is entered again, as again the base node has right after the coverage mode change no indication about the coverage mode change, and hence the wireless communication device is in the transition phase.

It becomes apparent that with the described exemplary embodiments the addressed problems are diligently solved and thus suggests a reliable method for handling the transitions between normal coverage mode and enhanced coverage mode.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for operating a wireless communication device (UE) supporting enhanced coverage mode (EC) and normal coverage mode (NC),
the wireless communication device operating with a base node (eNB) in normal coverage mode,
comprising the steps for the wireless communication device of:
- listening to normal coverage paging from the base node,
upon conducting a coverage mode change from normal coverage to enhanced coverage mode:
- receiving from the base node signal comprising information whether a coverage mode change to enhanced coverage mode requires sending a coverage area update to the base node,
- if said base node indicates said coverage area update, sending the coverage area update to the base node, and
- listening to enhanced coverage paging from the base node.

2. Method according to claim 1,
wherein the base node the wireless communication device is operating with in normal coverage mode and base node the wireless communication device is operating with in enhanced coverage mode are different physical base nodes.

3. Method according to at least one of the claim 1 or 2,
further comprising the step for the wireless communication device of
- monitoring signal quality of the base node and
- conducting a coverage mode change to enhanced coverage mode,
under the condition that:
- monitored signal quality from base node in normal coverage mode is under a predetermined threshold, and
- decodable signals from a base node supporting enhanced coverage mode are received at the wireless communication device.

4. Method according to at least one of the claim 1 to 3,
wherein the signal from the base node is a broadcast signal, in particular a system information broadcast.

5. Method for operating a wireless communication device (UE) supporting enhanced coverage mode (EC) and normal coverage mode (NC),
the wireless communication device operating with a base node (eNB) in enhanced coverage mode,
comprising the steps for the wireless communication device of:
- listening to enhanced coverage paging from the base node,
upon conducting a coverage mode change from normal coverage to enhanced coverage mode:
- listening to enhanced coverage paging and normal coverage paging from the base node,
- sending an indication relating to the coverage mode change to normal coverage mode by sending a regular transmission from the wireless communication device to the base node, and
- afterwards listening to normal coverage paging only from the base node.

6. Method according to at least one of the previous claims,
wherein the regular transmission is at least one of:
- a tracking area update,
- a time-triggered coverage area update,
- a connection request,
- a paging response.

7. Wireless communication device configured to operate in a cellular network, and the wireless communication device further configured to support enhanced coverage mode and normal coverage mode,
**characterized in that** while operating with a base node in normal coverage mode being configured to:
- listen to normal coverage paging from the base node,
upon a conducted coverage mode change from normal coverage mode to enhanced coverage mode;
- receive from the base node signal comprising information whether a coverage mode change to enhanced coverage mode requires sending a coverage area update to the base node,
- if said base node indicates said coverage area update, send the coverage area update to the base node and
- listen to enhanced coverage paging from the base node.

8. Wireless communication device according to claim 7,
further configured, if said base node waives said coverage area update,
- to send an indication relating to the coverage mode change to normal coverage mode by sending a regular transmission from the wireless communication device to the base node, and
- afterwards to listen to normal coverage paging from the base node.

9. Wireless communication device according to at least one of the claims 7 or 8, further configured to:
- monitor signal quality of the base node and
- conduct a coverage mode change to enhanced coverage mode,
under the condition that:
- monitored signal quality from base node in normal coverage mode is under a predetermined threshold, and
- decodable signals from a base node supporting enhanced coverage mode are received at the wireless communication device.

10. Wireless communication device configured to operate in a cellular network, and the wireless communication device further configured to support enhanced coverage mode and normal coverage mode,
**characterized in that** while operating with a base node in enhanced coverage mode being configured to:
- listen to enhanced coverage paging from the base node,
upon conducting a coverage mode change from normal coverage to enhanced coverage mode:
- listen to enhanced coverage paging and normal coverage paging from the base node,
- send an indication relating to the coverage mode change to normal coverage mode by sending a regular transmission from the wireless communication device to the base node, and
- afterwards listen to normal coverage paging only from the base node.

11. Base node (eNB) being part of a cellular network, configured to serve at least one camping wireless communication device (UE) in enhanced coverage mode (EC) or in normal coverage mode (NC),
further configured to transmit a signal to the at least one wireless communication device comprising information whether a coverage mode change from normal coverage mode to enhanced coverage modes requires sending a coverage area update to the base node,
to receive such a coverage area update from said wireless communication device,
in response to conduct paging of said wireless communication device in enhanced coverage mode.

12. Base node (eNB) according to claim 11,
wherein the base node is further configured to receive a regular transmission from said wireless communication device in a different coverage mode than the base node is conducting paging with,
in response conduct paging of said wireless communication device in the coverage mode used for the regular transmission.

13. Base node (eNB) according to at least one of the claims 11 or 12,
further connected with a mobility management entity (MME), being part of the cellular network,
the base node being configured, after detecting the coverage mode change of the wireless communication device,
to exchange information related with said coverage mode change with the mobility management entity,
in response to receive instructions from the mobility management entity to conduct paging in the indicated coverage mode.

14. Base node (eNB) according to at least one of the claims 11 to 13,
further configured to transmit said signal as part of a broadcast, in particular a system information broadcast.

15. Base node (eNB) according to at least one of the claims 12 to 14, wherein the regular transmission is at least one out of:
- a tracking area update,
- a time-triggered coverage area update,
- a connection request,
- a paging response.

16. System of a wireless communication device (UE) operating with a base node (eNB),
the base node being configured to send enhanced coverage mode (EC) system information to the wireless communication device comprising the indication to send coverage area updates, and
upon reception of said indication the wireless communication device being configured to send a coverage area update to the base node under the condition that it conducts a coverage mode change from normal coverage mode (NC) to enhanced coverage mode.
